(19) **Europäisches Patentamt**

**European Patent Office**

**Office européen des brevets**

(11) **EP 1 059 195 A2**

(12) **EUROPÄISCHE PATENTANMELDUNG**

(43) Veröffentlichungstag:
**13.12.2000 Patentblatt 2000/50**

(51) Int. Cl.⁷: **B60N 2/44**

(21) Anmeldenummer: **00250111.2**

(22) Anmeldetag: **04.04.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **08.06.1999 DE 19926994**

(71) Anmelder:
**Brose Fahrzeugteile GmbH & Co. KG Coburg**
**96450 Coburg (DE)**

(72) Erfinder:
• **Scheck, Georg**
  **96479 Weitramsdorf (DE)**
• **Schumann, Peter**
  **96253 Untersiemau (DE)**

(74) Vertreter:
**Ninnemann, Detlef, Dipl.-Ing. et al**
**Patentanwälte Maikowski & Ninnemann,**
**Xantener Strasse 10**
**10707 Berlin (DE)**

(54) **Verstellvorrichtung zur Erzeugung einer Drehbewegung**

(57) Eine Verstellvorrichtung zur Erzeugung einer Drehbewegung mit einem durch Betätigen eines Antriebselements 2a winkelverstellbaren Abtriebselement 3a weist eine zwischen dem Antriebselement 2a und dem Abtriebselement 3a angeordnete Lastmomentsperre 1a auf, die ein abtriebsseitig eingeleitetes Drehmoment kraftschlüssig blockiert und ein antriebsseitig eingeleitetes Drehmoment auf das Abtriebselement 3a überträgt. Zwischen dem Antriebselement 2a und der Lastmomentsperre 1a und/oder zwischen dem Abtriebselement 3a und der Lastmomentsperre 1a ist eine das Drehwinkelspiel zwischen dem Antriebselement 2a, dem Abtriebselement 3a und der Lastmomentsperre 1a ausgleichende Spielausgleichsvorrichtung 5a angeordnet. Die Versteilvorrichtung wird insbesondere für Fensterheber oder Sitzverstellungen eines Fahrzeuges angewandt.

**Fig. 1**

**Beschreibung**

Die Erfindung betrifft eine Verstellvorrichtung nach dem Oberbegriff des Anspruchs 1.

Aus der DE 41 20 617 C2 ist eine Verstellvorrichtung mit einer Lastmomentsperre bekannt, mit der ein antriebsseitiges Drehmoment in beide Richtungen auf ein Abtriebselement übertragen wird, während ein abtriebsseitiges Drehmoment in beide Richtungen durch die Lastmomentsperre blockiert und die Kraft in ein Verstellgehäuse geleitet und demzufolge nicht auf das Antriebselement übertragen wird.

Zwischen dem Antriebselement und der Lastmomentsperre wird das antriebsseitige Drehmoment mittels formschlüssig ineinandergreifender Elemente übertragen. Da sich durch Toleranzen und Verschleiß infolge hoher Flächenpressungen die Lage der Sperrelemente der Lastmomentsperre ändert, ist es zur Funktionssicherheit der bekannten Verstellvorrichtung erforderlich, ein großes Spiel einzubauen, so daß zwischen den ineinandergreifenden Elementen funktionsbedingt ein Drehwinkelspiel vorhanden ist, ohne das ein schrittweises Übertragen oder eine Richtungsumkehr der antriebsseitigen Drehmomente nicht möglich ist. Ein minimales Drehwinkelspiel muß zwischen den ineinandergreifenden Elementen von Antriebselement und Lastmomentsperre auch deshalb vorhanden sein, um einem Verschleiß vorzubeugen und um eine gewisse elastische Verformung zuzulassen.

Demgegenüber macht sich ein zu großes Drehwinkelspiel, insbesondere bei einem schrittweisen Übertragen des antriebsseitigen Drehmoments störend bemerkbar, da das Drehwinkelspiel einen entsprechend großen Leerweg bzw. Leerhub des Antriebselements bewirkt. Zudem kann ein zu großes Drehwinkelspiel bei einer Bewegungsumkehr zu einem störenden Umkehrspiel und einer unpräzisen Handhabung führen.

Die bekannte Verstellvorrichtung weist ein relativ großes Umkehrspiel in der Bremseinheit bedingt durch Bauteiltoleranzen auf. Um dieses zu begrenzen, muß entsprechend genau in einem engen Toleranzbereich gefertigt werden. Dabei ist der Zusammenbau der einzelnen mit geringen Toleranzen versehenen Bauteile aufwendig, da die zu verbindenden Bauteile genau zueinander positioniert werden müssen.

Aufgabe der vorliegenden Erfindung ist es, eine Verstellvorrichtung mit optimalem Drehwinkelspiel zwischen einem Antriebselement, einem Abtriebselement und einer Lastmomentsperre zu schaffen, das einerseits auf ein Minimum beschränkt ist und andererseits eine sichere Kraft- bzw. Drehmomentübertragung gewährleistet und das bei der Montage keine Einstellung und auch nach längerem Gebrauch kein Nachstellen des Drehwinkelspiels erfordert.

Diese Aufgabe wird erfindungsgemäß durch eine Verstellvorrichtung mit den Merkmalen des Patentanspruchs 1 gelöst.

Erfindungsgemäß ist zwischen dem Antriebselement und der Lastmomentsperre bzw. zwischen dem Abtriebselement und der Lastmomentsperre eine das Drehwinkelspiel zwischen dem Antriebselement, dem Abtriebselement und der Lastmomentsperre ausgleichende Spielausgleichsvorrichtung angeordnet, mit der das funktionsbedingte Drehwinkelspiel zwischen dem Antriebselement und der Lastmomentsperre bzw. der Lastmomentsperre und dem Abtriebselement selbsttätig ein- und nachgestellt wird. Dadurch erfolgt eine selbsttätige Einstellung des optimalen Drehwinkelspiels unter Berücksichtigung der Bauteiltoleranzen sowie die Nachstellung unter Berücksichtigung der Bauteileabnutzung, so daß ein minimaler Leerhub beim Betätigen und eine hohe Funktionssicherheit der Verstellvorrichtung unter Berücksichtigung des unabdingbaren Verschleißes gewährleistet ist. Die Fertigung der einzelnen Bauteile wird damit erheblich preiswerter, die Montage der Verstellvorrichtung vereinfacht und der Ausschuß auf ein Minimum beschränkt.

Vorzugsweise weist die Lastmomentsperre mindestens zwei in einem zylindrischen Verstellgehäuse angeordnete Sperrelemente auf, deren Klemmflächen unter Einwirkung der Spielausgleichsvorrichtung mit vorgegebener Vorspannung am Verstellgehäuse anliegen, indem die Spielausgleichsvorrichtung zumindest teilweise zwischen einander gegenüberliegenden Spreizflächen der Sperrelemente angeordnet ist und die Sperrelemente auseinanderdrückt. Durch ein abtriebsseitig eingeleitetes Drehmoment wird die Anlage der Klemmflächen und damit der Sperrelemente am Verstellgehäuse verstärkt.

Die Spielausgleichsvorrichtung kann im Antriebselement geführt sein und mit einer Feder verbunden werden, die die Spielausgleichsvorrichtung in Spielausgleichsrichtung vorspannt, während die Sperrelemente entgegen der Spielausgleichsrichtung mit einer Vorspannkraft beaufschlagt sind.

Die Spielausgleichsvorrichtung kann verschiedenartig ausgebildet sein, um die Anlage der Sperrelemente am Verstellgehäuse mit der vorgegebenen Vorspannkraft sicherzustellen und ein infolge Bauteilabnutzung erforderlich werdendes, selbsttätiges Nachstellen zu gewährleisten. In einer ersten Ausführungsform besteht die Spielausgleichsvorrichtung aus mindestens einem zwischen den Spreizflächen der Sperrelemente angeordneten Keil, dessen Keilflächen den Spreizflächen der Sperrelemente gegenüberstehen und der mit einer Keilführung formschlüssig in einer Kulisse des Antriebselements verschiebbar geführt und mittels einer Feder radial so vorgespannt ist, daß die Keilflächen spielfrei an den Spreizflächen anliegen.

Um sicherzustellen, daß der Keil einerseits bei fehlendem Antriebsmoment die optimale Ein- und Nachstellung bewirkt und die Bewegung der Sperrelemente nicht behindert, andererseits aber bei Einwirken eines antriebsseitigen Drehmoments durch die Sperrelemente nicht radial verstellt wird, und um das System in einem möglichst großen Bereich funktionsfähig zu halten, ist die Materialpaarung der Spreizflächen und der Keilflächen einerseits und der Wirkflächen der Keilführung und der Kulisse des Antriebselements andererseits so vorgegeben, daß bei fehlendem Antriebsmoment die Spreizflächen den Keil gegen die Wirkung der Feder verschieben können, bei antriebsseitiger Belastung der Keil aber in seiner Position gehalten wird. Dies wird beispielsweise durch einen kleinen Reibwert zwischen den Keilflächen und den Spreizflächen sowie durch einen hohen Reibwert zwischen der Führungsfläche des Keils und der Kulisse des Antriebselements bewirkt.

Alternativ oder zusätzlich kann die Verstellvorrichtung bzw. die Spielausgleichsvorrichtung geometrisch so gestaltet werden, daß der Keilwinkel $\alpha$, den die Keilflächen zwischen sich einschließen, der minimale Reibwinkel $\sigma_{sperr,min}$ bei antriebsseitiger Belastung und der maximale Reibwinkel $\sigma_{sperr,max}$ bei abtriebsseitiger Belastung zwischen den Keilflächen und den Spreizflächen sowie der minimale Reibwinkel $\sigma_{antr,min}$ zwischen der Keilführung und der Kulisse den Bedingungen

$$2 * \sigma_{sperr,max} < \alpha$$

$$\sigma_{antr,min} + \sigma_{sperr,min} > \alpha/2$$

genügt, wobei $\sigma = \arctan \mu$ und $\mu$ der Reibwert zwischen den aus den Flächenpaarungen Keilfläche/Spreizfläche und Keilführung/Kulisse gebildeten Reibflächen ist.

Um die Klemmwirkung des Keils zu verstärken, kann die Keilführung radial versetzt zu den Spreizflächen der Sperrelemente angeordnet werden. Auch eine Verringerung der (radialen) Höhe des Keils führt zu einer Verstärkung der Klemmwirkung, so daß im Bedarfsfall der Keilwinkel auch stumpfer gewählt werden kann.

Zur Herstellung einer definierten punkt- oder linienförmigen Berührung zwischen dem Keil und den Spreizflächen der Sperrelemente sind die Spreizflächen der Sperrelemente oder die Keilflächen ballig ausgebildet, so daß die Gleitwirkung infolge geringer Reibung der aufeinandergleitenden Flächen minimal und damit ein leichtes Nachstellen gewährleistet ist.

In einer zweiten Ausführungsform besteht die Spielausgleichsvorrichtung aus mindestens einer zwischen den Spreizflächen der Sperrelemente angeordneten zylinderförmigen Rolle oder einer Kugel, deren Rollen- oder Kugelführung in einer Kulisse des Antriebselements angeordnet und deren Außenfläche mit Linien- oder Punktberührung spielfrei an den ebenen oder balligen Spreizflächen der Sperrelemente anliegt.

In einer dritten Ausführungsform besteht die Spielausgleichsvorrichtung aus mindestens einem zwischen den Spreizflächen der Sperrelemente drehbar angeordneten Exzenter, der vorzugsweise als Stufenbolzen ausgebildet, mit einem Exzenterzapfen in einer Bohrung des Antriebselements angeordnet und mittels einer Drehfeder radial so vorgespannt ist, daß die Exzenterflächen spielfrei an den Spreizflächen der Sperrelemente anliegen.

Durch Formgebung und/oder Oberflächenbeschaffenheit liegen die Exzenterflächen so an den Spreizflächen der Sperrelemente an und der Exzenterzapfen ist so mit dem Antriebselement verbunden, daß der Exzenter beim Betätigen des Antriebselements blockiert und die Bewegung der Sperrelemente nicht behindert.

Ein selbsttätiger Ausgleich des optimalen Drehwinkelspiels kann bei unterschiedlichen Bauformen der Verstellvorrichtung bzw. des Antriebselements, des Abtriebselements und der Lastmomentsperre entsprechend den Merkmalen der Unteransprüche 14 bis 29 vorgesehen werden. Diese Ausführungsbeispiele umfassen unter anderem die Anordnung von Sperrelementpaaren in zwei übereinanderliegenden Ebenen, das Aufbringen einer Vorspannung auf die Spielausgleichsvorrichtung mittels Druck-, Bügel- oder Formfedern, mit oder ohne zusätzliche Kraftübertragungselemente wie Scheren und dergleichen und die formschlüssige Drehmomentübertragung vom Antriebs- zum Abtriebselement bei aufgehobener Sperrwirkung durch die Lastmomentsperre.

Weitere Vorteile ergeben sich aus den nachfolgend beschriebenen Ausführungsbeispielen. Es zeigen:

Fig. 1 bis 7 -    schematische Darstellungen zur Erläuterung des Funktionsprinzips verschiedener Spielausgleichsvorrichtungen für Verstellvorrichtungen mit einer Lastmomentsperre;

Fig. 8 -    einen Querschnitt durch eine Lastmomentsperre mit im Antriebselement geführten Keilen zum Einstellen von Bremselementen,

Fig. 9 -    einen Querschnitt durch eine Lastmomentsperre mit im Antriebselement geführten Keilen und mit Scherenarmen zum Einstellen von Sperrelementen,

Fig. 10 -    eine Draufsicht auf und

Fig. 11 -    einen Längsschnitt durch eine Lastmomentsperre mit im Antriebselement geführten Keilen und diese miteinander verbindenden Drahtfedern als Vorspannelemente,

Fig. 12 -    eine Lastmomentsperre entsprechend den Figuren 10 und 11 mit einer Bügel- oder Formfeder zwischen den die Sperrelemente einstellenden Keilen,

Fig. 13 und 14 -   eine Lastmomentsperre mit durch Federn verbundenen und an Stirnflächen der Sperrelemente anliegenden Keilen bei unterschiedlichem Spiel,

Fig. 15 und 16 -   eine Lastmomentsperre mit durch Federn verbundenen und von den Sperrelementen umfaßten Keilen bei unterschiedlichem Spiel,

Fig. 17 -   eine Lastmomentsperre mit stabförmigem, durch das Abtriebselement und den Keil einer Spielausgleichsvorrichtung geführtem Antriebselement und

Fig. 18 -   eine Lastmomentsperre wie in Figur 17 mit stabförmigem Antriebselement, das durch eine Bohrung des Abtriebselements gesteckt und auf dessen Ende ein Keil einer Spielausgleichsvorrichtung gesteckt ist.

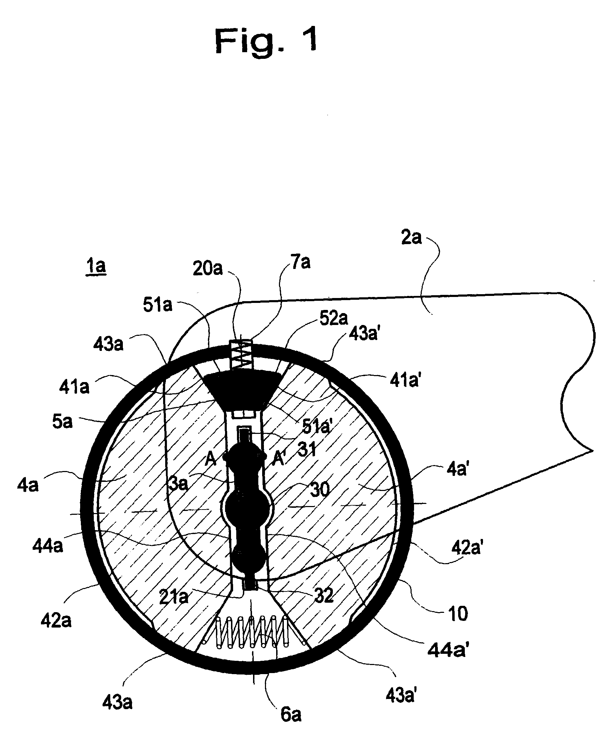

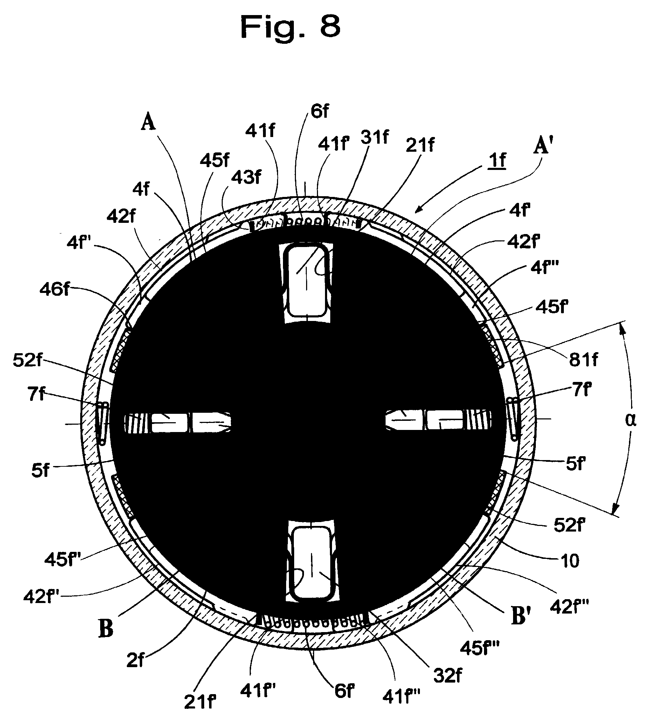

Die schematischen Darstellungen von Lastmomentsperren in den Figuren 1 bis 7 dienen ausschließlich zur Erläuterung des Funktionsprinzips eines Spielausgleichs für Verstellvorrichtungen. In den Figuren 8 bis 18 sind verschiedene Ausführungsbeispiele für konkret ausführbare Verstellvorrichtungen und darin eingesetzte Spielausgleichsvorrichtungen dargestellt. Die in den Funktionsdarstellungen der Figuren 1 bis 7 verwendeten Bezugszahlen sowie die zur Bezeichnung der Einzelteile der Verstellvorrichtungen in den konkreten Ausführungsbeispielen der Figuren 8 bis 18 verwendeten Bezugszahlen stimmen überein, soweit es sich um gleiche oder in ihrer Funktion übereinstimmende Bauteile handelt. Die alphabetischen Zusätze zu den Bezugszahlen kennzeichnen dementsprechend gleiche oder gleichartige Funktionselemente der verschiedenen Ausführungsformen.

Figur 1 zeigt einen Schnitt durch eine beidseitig wirkende Verstellvorrichtung 1a mit einem Verstellgehäuse 10, in dem die Funktionsteile einer Lastmomentsperre mit selbsttätigem Spielausgleich angeordnet sind. Ein als Antriebshebel 2a ausgebildetes Antriebselement ist drehbar um eine Abtriebsachse 30 angeordnet, die mit einem Abtriebselement 3a verbunden ist. Zwischen dem Antriebselement 2a und dem Abtriebselement 3a sind als Segmente ausgebildete Sperrelemente 4a und 4a' angeordnet, die mit einem als Sperrflächen 43a und 43a' ausgebildeten Teil ihrer peripheren Flächen 42a, 42a' an der zylindrischen Innenfläche des Verstellgehäuses 10 anliegen.

An einander gegenüberliegenden Spreizflächen 41a, 41a' der Sperrelemente 4a und 4a' liegen Keilflächen 51a und 51a' eines Keils 5a an, der einen selbsttätigen Spielausgleich bewirkt. Der Keil 5a ist mit einer Keilführung 52a in einer als Kulisse ausgebildeten Ausnehmung 20a des Antriebshebels 2a gelagert und mittels einer Feder 7a so vorgespannt, daß die Keilflächen 51a, 51a' in Spielausgleichsrichtung zirkular gegen die Spreizflächen 41a, 41a' der Sperrelemente 4a, 4a' drücken und damit die Sperrflächen 43a, 43a' der Sperrelemente 4a, 4a' zur Anlage an die zylindrische Innenfläche des Verstellgehäuses 10 bringen.

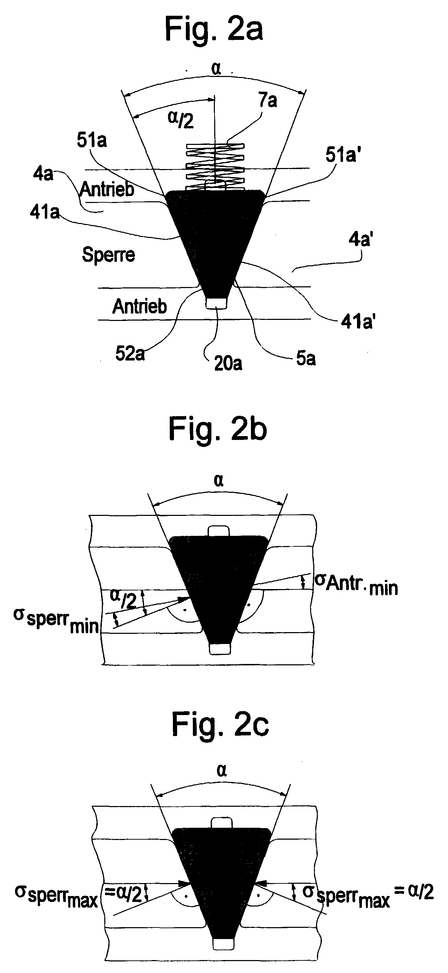

Mittels einer Sperrelementefeder 6a werden die Sperrelemente 4a, 4a' zirkular entgegen der Spielausgleichrichtung vorgespannt, so daß die Spreizflächen 41a, 41a' bestrebt sind, den Keil 5a aus dem Zwischenraum zwischen den Spreizflächen 41a und 41a' herauszudrücken. Wie nachfolgend anhand der vergrößerten Einzelteildarstellung der Spielausgleichsvorrichtung gemäß den Figuren 2a bis 2c näher erläutert wird, sind die Reibungsverhältnisse zwischen den Spreizflächen 41a, 41a' und den Keilflächen 51a, 51a' einerseits und der Keilführung 52a und der Kulisse 20a andererseits so beschaffen, daß beim Aufbringen eines antriebsseitigen Drehmoments die Sperrelemente 4a, 4a' spielfrei durch den Keil 5a mitgenommen werden, andererseits aber die Sperrelemente 4a und 4a' ohne eine Behinderung durch den Keil 5a zum Spielausgleich nachgesetzt werden, d.h. im Ruhezustand durch den Keil 5a unter Wirkung der Feder 7a mit ihren Sperrflächen 23a, 23a' gegen das Verstellgehäuse 10 gedrückt werden.

Diese Funktion bedingt einen kleinen Reibwert an der zwischen den Keilflächen 51a, 51a' und den Spreizflächen 41a, 41a' gebildeten Reibfläche und einen großen Reibwert an der zwischen der Keilführung 52a und der Kulisse 20a gebildeten Reibfläche, so daß unter bestimmten geometrischen Voraussetzungen der Keil 5a daran gehindert ist, aus dem Zwischenraum zwischen den Spreizflächen 41a, 41a' herausgedrückt zu werden.

Beim Einleiten eines antriebsseitigen Drehmoments über den Antriebshebel 2a wird das Drehmoment über den Keil 5a auf die Spreizflächen 41a bzw. 41a' der Sperrelemente 4a bzw. 4a' je nach Drehrichtung übertragen und die Sperrelemente 4a bzw. 4a' werden in Umfangsrichtung mitgeführt, da die Anlage der Sperrflächen 43a, 43a' der Sperrelemente 4a, 4a' an der zylindrischen Innenfläche des Verstellgehäuses 10 nicht ausreicht, um das eingeleitete Drehmoment zu blockieren. Nachdem das Sperrelement 4a, 4a' geringfügig in Umfangsrichtung durch das eingeleitete antriebsseitige Drehmoment bewegt wurden, kommen die Kulissen 21a und 21a' des Antriebshebels 2a formschlüssig in Eingriff mit abtriebsseitigen Klauen 31, 32 und führen das Abtriebselement 3a formschlüssig in die jeweilige Drehrichtung des Antriebshebels 2a mit. Eine solche zusätzliche formschlüssige Verbindung zwischen Antriebselement 2a und Abtriebselement 3a, die nach dem Einleiten einer geringfügigen Drehung aktiviert wird und die weitere Übertragung des vom Antriebselement 2a ausgeübten Drehmoments auf das Abtriebselement 3a übernimmt, ist jedoch nicht zwingend erforderlich, da die Übertragung des Drehmoments vom Antriebselement 2a auf das Abtriebselement 3a auch über den Keil 5a der Spielausgleichsvorrichtung und die Sperrelemente 4a, 4a' auf das Abtriebselement 3a erfolgen kann.

Beim Einleiten eines abtriebsseitigen Drehmoments wird je nach Drehrichtung die Außenfläche des Abtriebselements 3a an den Punkten A oder A' stärker belastet und drückt die innenliegenden Sperrelementflächen 44a, 44a' radial auseinander, so daß die Sperrflächen 43a bzw. 43a' ihre Anlage an der zylindrischen Innenfläche des Verstellgehäuses 10 verstärken und damit das abtriebsseitig eingeleitete Drehmoment blockieren.

Figur 2a zeigt in einer vergrößerten Einzelteildarstellung der Figur 1 eine Spielausgleichsvorrichtung mit einem Keil 5a als Spielausgleichselement und einen Ausschnitt des Antriebshebels 2a mit darin als Ausnehmung vorgesehener Kulisse 20a, in der die Keilführung 52a des Keils 5a angeordnet ist und formschlüssig an den senkrecht zur Antriebsrichtung verlaufenden Seitenwänden der Kulisse 20a des Antriebshebels 2a anliegt, aber senkrecht zur Antriebsrichtung innerhalb der Kulisse 20a verschiebbar ist.

An den Keilflächen 51a und 51a' des Keils 5a liegen die Spreizflächen 41a und 41a' der Sperrelemente 4a, 4a' an. Zum Betätigen der mit dem Abtriebselement 3a kraftschlüssig verbundenen Sperrelemente 4a, 4a' ist der Keil 5a im Antriebselement 2a mit der Keilführung 52a geführt und so mit einer Druckfeder 7a beaufschlagt, daß die Keilflächen 51a und 51a' spielfrei an den Spreizflächen 41a, 41a' der Sperrelemente 4a, 4a' anliegen, ohne sie gegen eine evtl. vorhandene Feder (beispielsweise die Sperrelementefeder 6a gemäß Figur 1) auseinanderzudrücken oder die Sperrelemente 4a, 4a' von der zylindrischen Innenwand des Verstellgehäuses 10 abzuheben.

Figur 2b zeigt die Kraft- und Reibungsverhältnisse bei antriebsseitiger Belastung, d.h. bei Einwirken des Antriebselements 2a auf den Keil 5a. Bei einer Mitnahme des Keils 5a durch das Antriebselement 2a gegen eine Seite des Sperrelements 4a bzw. 4a' wirkt als Keilwinkel $\alpha/2$. Im Kräftegleichgewicht, d.h. im Blockierzustand ist

$$\sigma_{antr} + \sigma_{sperr} = \alpha/2 \qquad (1)$$

Um ein sicheres Halten zu gewährleisten, muß die Summe der Reibwerte beim Durchrutschen des Keils 5a aber größer als der Keilwinkel $\alpha/2$ sein, so daß bei antriebsseitiger Belastung

$$\sigma_{antr,min} + \sigma_{sperr,min} > \alpha/2 \qquad (2)$$

gilt, wobei $\sigma_{sperr,min}$ der minimale Reibwinkel und $\sigma_{sperr,max}$ der maximale Reibwinkel zwischen den Keilflächen 51a und den Spreizflächen 41a, $\sigma_{antr,min}$ der minimale Reibwinkel zwischen der Keilführung 52a und der Kulisse 20a, $\sigma = arc\ tan\ \mu$ und $\mu$ der Reibwert zwischen den aus den Flächenpaarungen Keilfläche/Spreizfläche und Keilführung/Kulisse gebildeten Reibflächen ist.

Figur 2c zeigt die Kräfte und Reibwinkel bei abtriebsseitiger Belastung, d.h. bei Belastung seitens der Sperrelemente 4a bzw. 4a'. In diesem Fall der antriebsmomentenfreien Belastung des Keils 5a von Seiten des Sperrelements 4a bzw. 4a' muß die Summe der Grenzreibwerte

$$2 * \sigma_{sperr,max} < \alpha \qquad (3)$$

sein, damit der Keil 5a die Bewegung der Sperrelemente 4a, 4a' nicht behindert. Wenn diese Bedingung erfüllt ist, rutscht der Keil 5a ohne ein Antriebsmoment infolge einer von den Sperrelementen 4a, 4a' ausgeübten Kraft durch, während er bei einem von dem Antriebselement 2a auf die Sperrelemente 4a, 4a' ausgeübten Kraft blockiert.

Damit das System in einem möglichst großen Bereich von $\sigma_{sperr}$ funktioniert, ist es vorteilhaft, $\sigma_{antr,min}$ möglichst groß zu machen, z.B. durch Vorsehen entsprechender Rauhigkeiten oder einer Mini-Verzahnung.

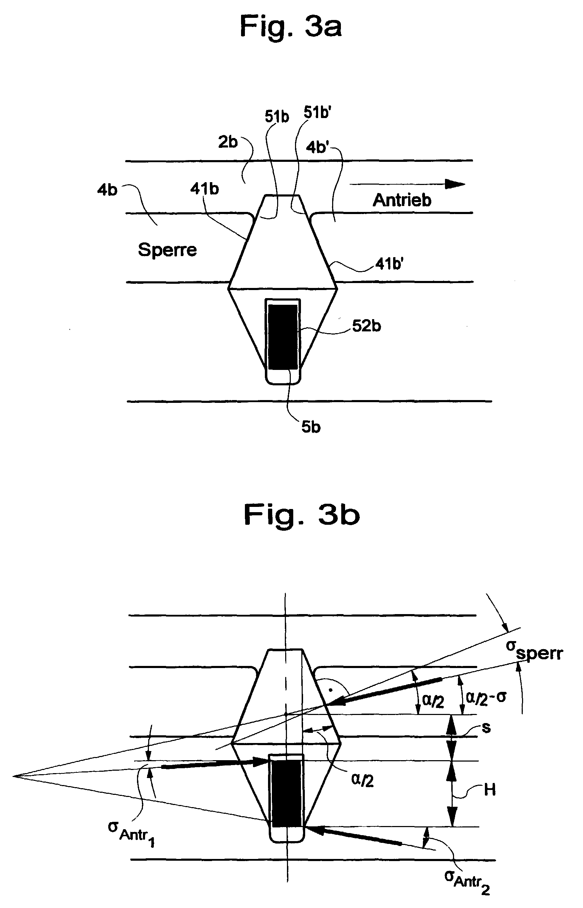

Figur 3 zeigt eine Möglichkeit, den Selbsthemmungseffekt eines Keils 5b gegen ein Herausdrücken des Keils 5b durch Einwirken der Spreizflächen 41b, 41b' der Sperrelemente 4b, 4b' auf den Keil 5b zu verstärken, indem durch Verkanten eine Anlage des Keils 5b an zwei Punkten herbeigeführt wird. Dies wird durch eine exzentrische Anordnung der Keilführung 52b in Bezug auf die Spreizflächen 41b, 41b' der Sperrelemente 4b, 4b' erreicht, wobei die Höhe H der Keilführung 52b und der Abstand s der Oberkante der Keilführung 52b vom Berührungspunkt der Spreizflächen 41b, 41b' veränderbar ist.

Mit Abnahme der Höhe H bzw. durch Vergrößerung des Abstands s wird der Verkantungseffekt verstärkt, so daß der Keilwinkel $\alpha$ des Keils 5a stumpfer werden kann. Für den Fall, daß der Abstand s gleich Null ist, liegt die Anordnung gemäß der Wirkungsweise von Figur 2 vor. Bei zunehmendem Abstand s entsteht durch die versetzte Keilführung ein sich verstärkender Verkantungseffekt, welcher die Anlagekräfte erhöht und das System bei einer Antriebsbelastung mit wesentlich kleineren Reibwinkeln am Durchrutschen hindert. Bei vorgegebenem Keilwinkel $\alpha$ muß somit eine minimale Höhe H der Keilführung 52b sowie ein minimaler Abstand s der Mitte der Keilführung 52b von der Mitte der Spreizflächen 41b, 41b' der Sperrelemente 4b, 4b' vorgesehen werden, um die Funktion der Spielausgleichsvorrichtung zu gewährleisten.

Figur 3 zeigt eine ballige Ausführung der Spreizflächen 41c, 41c' der Sperrelemente 4c, 4c', wobei die Keilflächen 51c, 51c' die Winkel für die vorstehend beschriebenen geometrischen Verhältnisse festlegen. Alternativ können die Keilflächen 51c und 51c' ballig ausgeführt sein und die Spreizflächen 41c, 41c' der Sperrelemente 4c, 4c' eben.

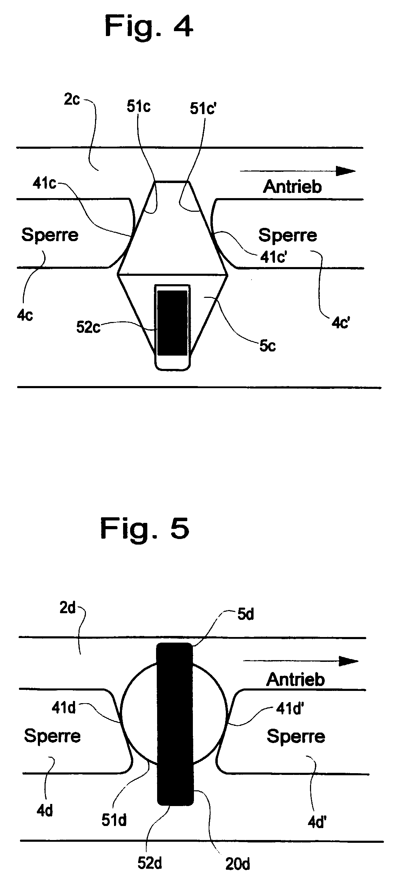

Figur 5 zeigt ein Funktionsschema, bei dem anstelle eines Keils wie bei den vorstehend beschriebenen Verstellvorrichtungen ein Zylinder oder eine Kugel als Spielausgleichselement 5d vorgesehen ist und analog zu den vorstehend beschriebenen Ausführungsbeispielen mit einer Führung 53d in einer Kulisse 20d des Antriebselements 2d geführt ist. Das Spielausgleichselement 5d liegt mit seiner Zylinder- bzw. Kugelfläche 51d an den Spreizflächen 41d, 41d' der Sperrelemente 4d, 4d' an.

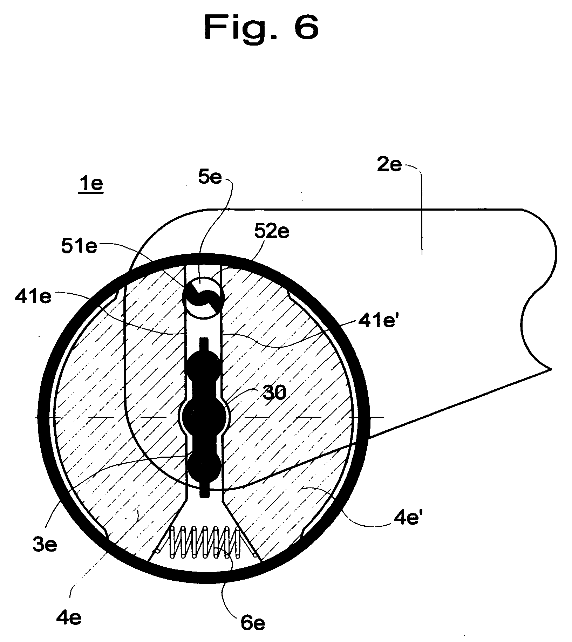

Figur 6 zeigt eine Verstellvorrichtung 1e, die der Verstellvorrichtung 1a gemäß Figur 1 entspricht. Im Unterschied zu der Verstellvorrichtung 1a gemäß Figur 1 ist hier jedoch eine Spielausgleichsvorrichtung in Form eines mit einer Drehfeder vorgespannten und als Stufenbolzen ausgeführten Exzenters 5e vorgesehen, der mit einem Führungszapfen 52e in einer Bohrung 20e des als Antriebshebel 2e ausgebildeten Antriebselements gelagert ist und mit Exzenterflächen 51e an den Spreizflächen 41e und 41e' der Sperrelemente 4e, 4e' anliegt.

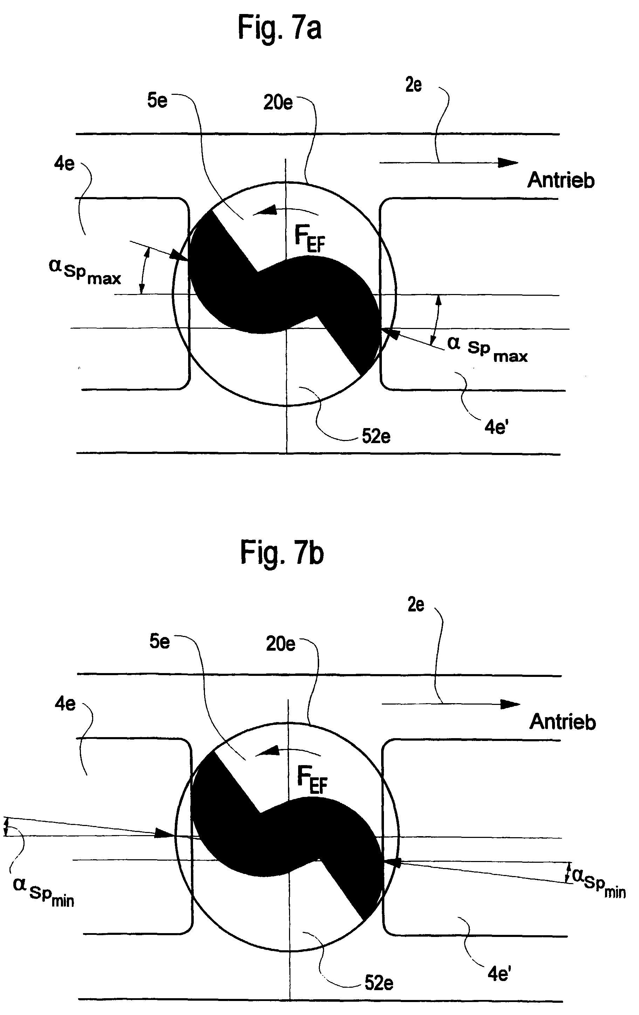

In den Figuren 7a und 7b sind in einer vergrößerten Einzelteilansicht die Spielausgleichsvorrichtung gemäß Figur 6 und die für die Funktion der Spielausgleichsvorrichtung wesentlichen geometrischen Verhältnisse bei abtriebsseitiger Belastung (Figur 7a) seitens der Sperrelemente und bei antriebsseitiger Belastung (Figur 7b) seitens des Antriebselements 2e dargestellt. Die Federvorspannung des Exzenters 5e ist in Richtung des Pfeiles $F_{EF}$ eingetragen.

Die Anlage- und Reibverhältnisse der in den Figuren 6, 7a und 7b dargestellten Spielausgleichsvorrichtung sind so ausgelegt, daß der Exzenter 5e bei Betätigung des Antriebselements 2e blockiert, die für eine einwandfreie Sperrung eines abtriebsseitig eingeleiteten Drehmoments notwendige Bewegung der Sperrelemente 4e und 4e' auch unter Berücksichtigung von Bauteilabnutzungen jedoch nicht behindert.

Gemäß Figur 7a sind die Anlagepunkte zwischen dem Exzenter 5e und den Sperrelementen 4e, 4e' so ausgelegt, daß sich bei einer Belastung durch die Sperrelemente 4e bzw. 4e' ein relativ großer Winkel $\alpha_{sp\ max}$ zwischen der Kraftrichtung der Berührungspunkte und der Horizontalen ergibt, der größer ist als der maximale Reibwinkel, so daß bei einer abtriebsseitigen Belastung der Exzenter 5e durch die Sperrelemente 4e, 4e' entgegen der Vorspannkraft $F_{EF}$ des Exzenters 5e zurückgedreht werden kann.

Bei den in Figur 7b dargestellten Verhältnissen bei antriebsseitiger Belastung ergibt sich andererseits ein minimaler Reibwinkel $\alpha_{sp\ min}$ zwischen den Spreizflächen 41e und 41e' der Sperrelemente 4e, 4e' und dem Exzenter 5e, der ein Zurückdrehen des Exzenters 5e verhindert und somit eine unmittelbare und spielfreie Kraftübertragung gewährleistet. Der Reibbereich zwischen $\alpha_{sp\ min}$ und $\alpha_{sp\ max}$ ist der Bereich, in dem die Reibwerte der Flächenanlage zwischen dem Exzenter und den Sperrelementen für ein Funktionieren des Systems liegen müssen. Aus der Kraftrichtung von $\alpha_{sp\ min}$ ergibt sich der Kraftangriffspunkt zwischen dem Antriebelement und dem Lager des Exzenters. Der Reibwert zwischen diesen Flächen muß dabei so ausgelegt werden, daß der Durchrutsch-Reibwinkel $\sigma = \arctan \mu$ größer ist als der Winkel $\alpha_{antr\ min}$ zwischen dieser Kraftrichtung und der Normalen auf dem Kreis, d.h. die Lagerung des Exzenters im Antrieb muß bewußt rauh ausgeführt werden.

Mit anderen Worten: Wenn die Sperrelemente 4e, 4e' zusammengedrückt werden, muß sich der Exzenter 5e wegdrehen, woraus ein maximaler Winkel $\alpha_{sp\ max}$ resultiert. Alle Reibwinkel müssen daher kleiner sein als $\alpha_{sp\ max}$, damit der Exzenter 5e wegrutschen kann.

In den Figuren 8 bis 19 sind verschiedene Varianten von Lastmomentsperreen für Verstellvorrichtungen dargestellt, bei denen das funktionsbedingte Drehwinkelspiel zwischen dem Antriebselement und der Lastmomentsperre selbsttätig ein- und nachstellbar ist.

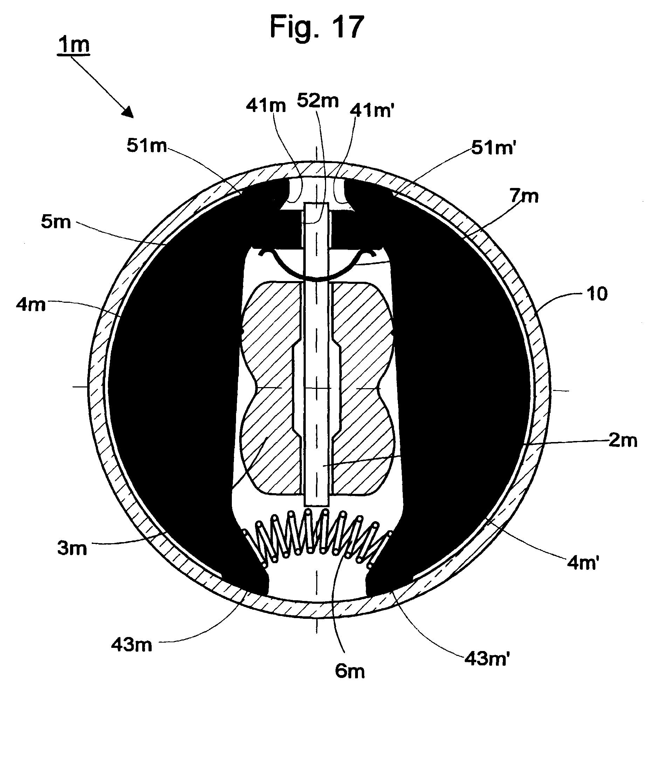

Hierzu zeigen die Figuren 8 bis 16 Ausführungsbeispiele für Lastmomentsperreen mit in zwei Ebenen angeordneten Sperrelementen für jede der beiden Drehrichtungen der Verstellvorrichtung, während in den Figuren 17 bis 24 Ausführungsbeispiele für Lastmomentsperren mit in einer Ebene angeordneten Sperrelementen für jede der beiden Drehrichtungen der Verstellvorrichtung dargestellt sind.

Der in Figur 8 dargestellte Teil einer Verstellvorrichtung mit selbsttätigem Ausgleich des funktionsbedingten Drehwinkelspiels weist antriebsseitig eine Mitnehmerscheibe 2f auf, das innerhalb eines Verstellgehäuses 10 drehbar gelagert und mit einem nicht näher dargestellten Antriebshebel verbunden ist, der in der einen oder anderen Drehrichtung verschwenkbar ist und eine entsprechende Drehbewegung der Mitnehmerscheibe 2f in der einen oder anderen Drehrichtung bewirkt. Die Mitnehmerscheibe 2f weist diametral gegenüberliegende fensterförmige Öffnungen 21f, 21f' auf, in die Klauen 31f, 31f' eines um eine Drehachse 30 drehbaren Abtriebselements 3f hineinragen, auf das ein auf die Mitnehmerscheibe 2f ausgeübtes Drehmoment übertragen wird.

Die Lastmomentsperre 1f enthält in zwei übereinanderliegenden Ebenen zwei segmentartige Sperrelementpaare 4f, 4f' und 4f'', 4f''', zwischen deren einander gegenüberstehenden Sehnenflächen 45f, 45f' bzw. 45f'', 45f''' das Abtriebselement 3f angeordnet ist.

Das Abtriebselement 3f und die Sperrelemente 4f, 4f' und 4f", 4f"' berühren sich bei Einleitung eines abtriebsseitigen Drehmoments dabei abhängig von der Drehrichtung des Abtriebselements 3f an den Punkten A, B' bzw. B, A'.

An den Klauen 31f, 32f einerseits und an Spreizflächen 41f, 41f' und 41f", 41f"' der Sperrelemente 4f, 4f' und 4f", 4f"'liegen in jeder Ebene der Sperrelemente 4f, 4f' und 4f", 4f"' Sperrelementefedern 6f, 6f' an, die aus einer W-Feder und einer zur Verstärkung der W-Feder an den Spreizflächen 41f, 41f' und 41f", 41f"' der Sperrelemente 4f, 4f' und 4f", 4f"' anliegenden Enden angeordneten Druckfeder bestehen. Die Federn 6f, 6f' bewirken, daß die Sperrelemente 4f, 4f' und 4f", 4f"'sowohl am Abtriebselement 3f als auch mit ihren Klemmflächen 43f, 43f' und 43f", 43f"', die Teil der peripheren Flächen 42f, 42f' und 42f", 42f"' der Sperrelemente 4f, 4f' und 4f", 4f"'mit größerem Durchmesser sind, am Verstellgehäuse 10 anliegen.

In peripheren Ausnehmungen der Sperrelemente 4f, 4f' und 4f", 4f"'sind die abgekröpften Enden zweier Scherenarme 81f, 82f angeordnet, die jeweils an radialen Anschlägen 46f (von denen nur der radiale Anschlag des einen Sperrelements 4f bezeichnet wurde) der Sperrelemente 4f, 4f' und 4f", 4f"' in den beiden Ebenen anliegen. Diese Anlage wird durch Keile 5f, 5f' bewirkt, die in diametral zueinander angeordneten schlitzförmigen Kulissen 20f, 20f' der Mitnehmerscheibe 2f mittels Keilführungen 52f, 52f' geführt sind und mit ihren beidseitigen Keilflächen 51f, 51f' an den seitlichen Anlageflächen der Scherenarme 81f, 82f anliegen.

Federn 7f, 7f' zwischen dem Verstellgehäuse 10 und den dem Verstellgehäuse 10 zugewandten Stirnflächen der Keile 5f, 5f' drücken die Keile 5f, 5f' in Richtung auf die Abtriebsachse 30 und bewirken damit eine Spreizung der Scherenarme 81f, 82f, so daß diese mit ihren abgewinkelten Enden an den radialen Anschlägen 46f der Sperrelemente 4f, 4f' und 4f", 4f"' anliegen. Zu diesem Zweck sind die Federn 7f, 7f' nur so stark ausgebildet, daß sie die Scherenarme 81f, 82f zur Anlage von deren abgekröpften Enden an den radialen Anschlägen 46f der Sperrelemente 4f, 4f' und 4f", 4f"'auseinanderspreizen, nicht aber die Sperrelemente 4f, 4f' und 4f", 4f"' gegen die Wirkung der Sperrelementefedern 6f, 6f' verdrehen können.

Die Kulissen 20f, 20f' der Mitnehmerscheibe 2f zur Aufnahme der Keilführungen 52f, 52f' weisen eine rauhe oder geriffelte Oberfläche auf, so daß eine selbsthemmende Lagerung der Keile 5f, 5f' in den Kulissen 20f, 20f' der Mitnehmerscheibe 2f gewährleistet ist. Dagegen weist die Anlage der Keile 5f, 5f' an den seitlichen Anlageflächen der Scherenarme 81f, 82f keine Selbsthemmung auf, d.h. bei einem Zusammendrücken der Scherenarme 81f, 82f in Richtung auf die Keile 5f, 5f' würden die Keile 5f, 5f' nach außen, d.h. in Richtung auf das Verstellgehäuse 10 gedrückt werden. Vorzugsweise sind die Keilflächen 51f, 51f' oder die seitlichen Anlageflächen der Scherenarme 81f, 82f mit einer balligen Oberfläche versehen, um eine Linienberührung zwischen den Anlageflächen der Scherenarme 81f, 82f und den Keilflächen 51f, 51f' der Keile 5f, 5f' zu erzielen.

Der Keilwinkel α ist - wie vorstehend im Zusammenhang mit den Figuren 1 bis 4 erläutert wurde - so bemessen, daß die Keile 5f, 5f' unter Belastung nicht nach außen, d.h. in Richtung auf das Verstellgehäuse 10 bewegt werden.

Im Ruhezustand werden die Sperrelemente 4f, 4f' und 4f", 4f"' unter Einwirkung der Sperrelementefedern 6f, 6f' in jeder Ebene der Sperrelemente 4f, 4f' und 4f", 4f"'auseinandergedrückt und im Verstellgehäuse 10 so weit in Umfangsrichtung oder zirkular verdreht, bis sie sowohl mit ihren Klemmflächen 43f, 43f' und 43f", 43f"' am Verstellgehäuse 10 als auch an den Punkten A und B bzw. A' und B' am Abtriebselement 3f anliegen. Wird ein Drehmoment auf die Mitnehmerscheibe 2f gegen das mit einem gebogenen Pfeil eingetragene Abtriebsmoment M ausgeübt, so drückt die Mitnehmerscheibe 2f über die Kulissen 20f, 20f', die Keilführungsnasen 52f, 52f' und die Keilflächen 51f' gegen den Scherenarm 81f, der die abtriebsseitig unbelasteten Sperrelemente 4f und 4f"'in Antriebsrichtung verdreht, bevor das Antriebsmoment über die fensterförmigen Ausnehmungen 21f, 21f' in der Mitnehmerscheibe 2f auf die Klauen 31f, 31f' des Abtriebselements 3f einwirkt und eine entsprechende Drehbewegung des Abtriebselements 3f bewirkt.

Wird ein Antriebsmoment auf die Mitnehmerscheibe 2f in Richtung des Abtriebsmoments M ausgeübt, so wird der andere Scherenarm 82f über die Keile 5f, 5f' belastet und verdreht die durch das Abtriebsmoment verspannten Sperrelemente 4f' und 4f".

Werden aufgrund eines abtriebsseitigen Drehmoments die Sperrelemente 4f, 4f' und 4f", 4f"' durch das Abtriebselement 3f belastet, so bewegen sich die radialen Anschläge 46f der Sperrelemente 4f, 4f' und 4f", 4f"' aufeinander zu und verschieben entsprechend die Scherenarme 81f, 82f zueinander. Da diese Bewegung durch die Keile 5f, 5f' nicht behindert werden darf, muß der Keilwinkel α so groß sein, daß sich die Keile 5f, 5f' ohne Selbsthemmung nach außen bewegen können.

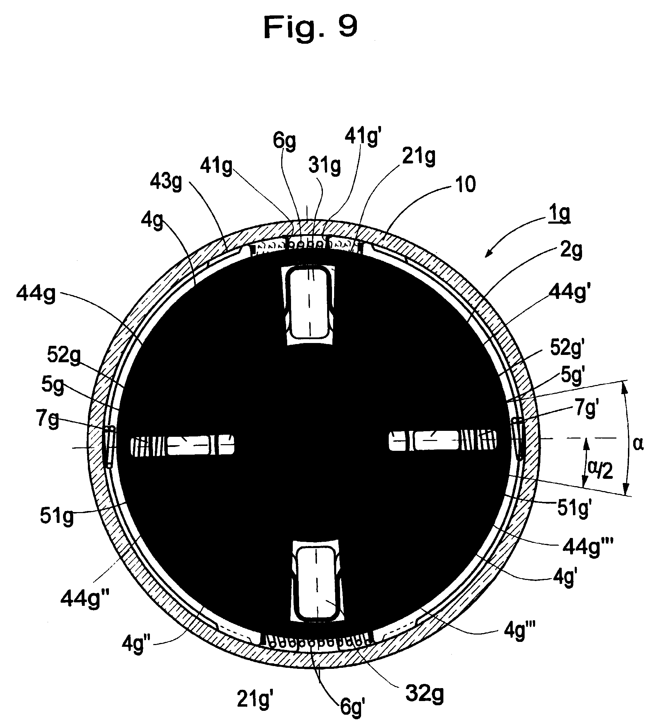

Eine Ausführungsform mit selbsttätigem Spielausgleich zwischen einem Antriebselement 2g, einem Abtriebselement 3g und einer Lastmomentsperre 1g ohne Scherenarme ist in Figur 9 dargestellt, wobei gleiche Funktionsteile mit denselben Bezugsziffern wie in Figur 8 bezeichnet sind, so daß insoweit auf die Beschreibung und Erläuterung der Funktion dieser Teile in Verbindung mit der Darstellung in Figur 8 Bezug genommen werden kann.

In dieser Ausführungsform weisen die Sperrelemente 4g, 4g' und 4g", 4g"'zweier übereinander angeordneter Sperrelementepaare fensterartige Ausnehmungen 44 (von denen nur die Ausnehmung des einen Sperrelements 4g bezeichnet wurde) auf, in denen Keile 5g, 5g' angeordnet sind und mit ihren Keilflächen 51g, 51g' an der einen bzw. anderen Seitenfläche der Ausnehmungen 44 der übereinander angeordneten Sperrelemente 4g, 4g' und 4g", 4g''' anliegen. Die ebenfalls in Kulissen 20g, 20g' der Mitnehmerscheibe 2g mittels Keilführungen 52g, 52g' geführten Keile 5g, 5g' drücken mit ihren Keilflächen 51g, 51g' unmittelbar gegen die Sperrelemente 4g, 4g' und 4g", 4g''' und bewirken damit einen automatischen Spielausgleich infolge von Toleranzen und Abnutzung durch die hohe Flächenpressung bei gleichzeitiger Einhaltung des funktionsnotwendigen Drehwinkelspiels.

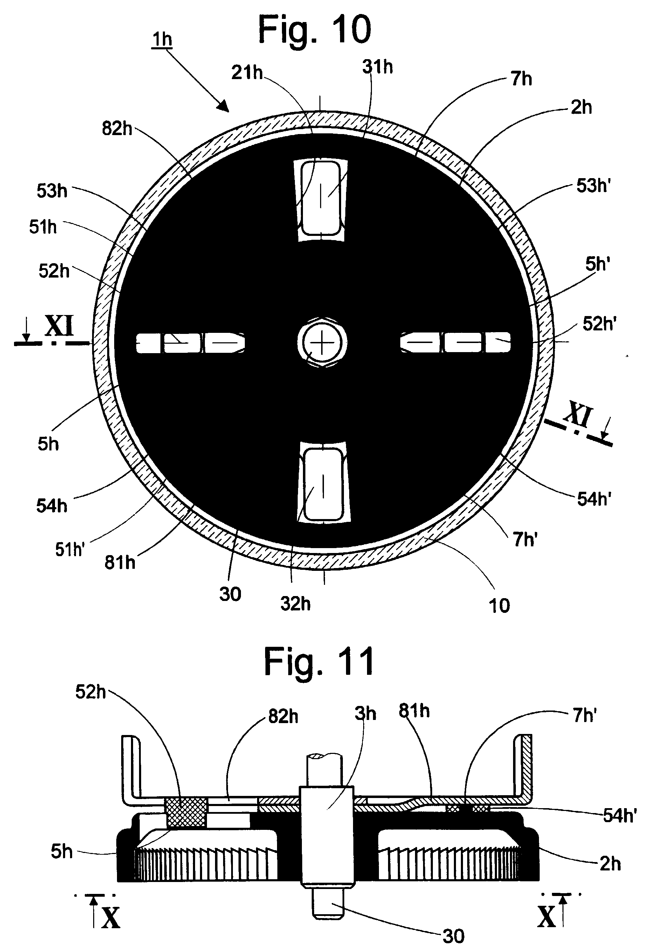

Figur 10 zeigt eine Draufsicht und Figur 11 einen Längsschnitt entlang der Linie XI-XI in Figur 10 durch eine der Lastmomentsperre 1f gemäß Figur 8 entsprechende Lastmomentsperre 1h.

In dieser Anordnung sind anstelle der in Figur 8 vorgesehenen Federn 7f, 7f' zwischen dem Verstellgehäuse 10 und den dem Verstellgehäuse 10 zugewandten Stirnseiten der Keile 5h, 5h' zwei Drahtfedern 7h, 7h' vorgesehen, deren Enden in Ausnehmungen 53h, 53h' bzw. 54h, 54h' der Keile 5h, 5h' abgestützt sind. Die Enden der Drahtfedern 7h, 7h' liegen kraftschlüssig an den der Abtriebsachse 30 näherliegenden Wandungen der Ausnehmungen 53h, 53h' bzw. 54h, 54h' der mit Keilführungen 52h, 52h' in Kulissen der Mitnehmerscheibe 2h geführten Keile 5h, 5h' an und bewirken eine geringfügige Vorspannung der Keile 5h, 5h' in Richtung auf die Abtriebsachse 30, so daß die Scherenarme 81h, 82h analog zur Anordnung und Beschreibung gemäß Figur 8 auseinandergedrückt und deren abgekröpfte Enden zur Anlage an die radialen Anschläge der (hier nicht näher dargestellten) Sperrelemente gebracht werden.

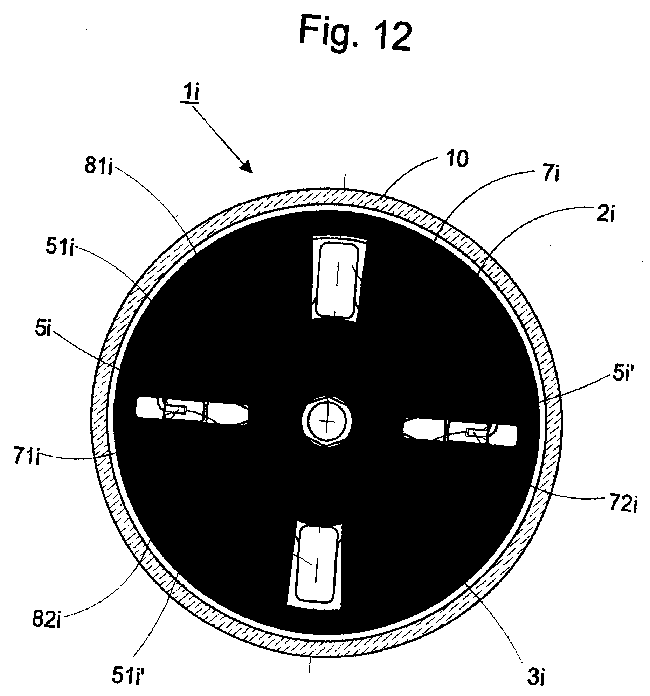

Eine zur Lastmomentsperre 1h gemäß den Figuren 10 und 11 alternative Lastmomentsperre 1i ist in Figur 12 dargestellt und weist anstelle zweier Drahtfedern zur Vorspannung der Keile 5i, 5i' eine Bügel- oder Formfeder 7i auf, deren abgewinkelte Enden 71i, 72i in Ausnehmungen 55i, 55i' der Keile 5i, 5i' angeordnet sind und eine entsprechende Anlage der Keilflächen der Keile 5i, 5i' an den Scherenarmen 81i, 82i zum Spielausgleich bewirken. Auch in der Darstellung dieses Ausführungsbeispiels weisen Elemente mit gleichen Bezugsziffern wie in den vorstehend dargestellten Ausführungsbeispielen den gleichen Aufbau und die gleiche Funktion auf.

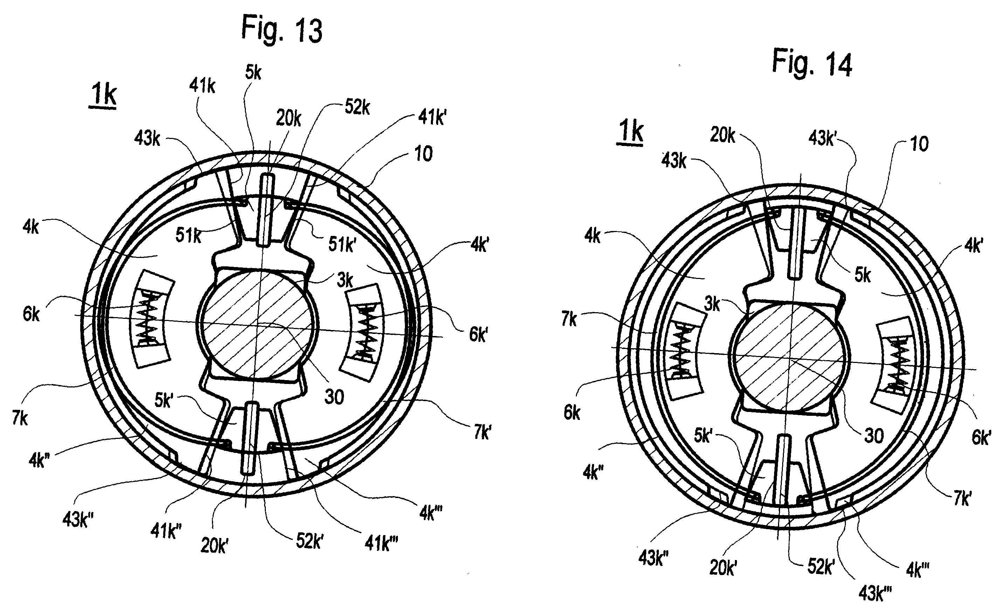

Zwei weitere Varianten für einen selbsttätigen Spielausgleich zwischen einem Antriebselement, einem Abtriebselement und einer Lastmomentsperre mit in zwei Ebenen übereinander angeordneten Sperrelementepaaren sind in den Figuren 13 bis 16 bei jeweils minimalem und maximalem Spiel sowie mit innen- und außenliegenden Keilen dargestellt.

Die Lastmomentsperre 1k gemäß den Figuren 13 und 14 weist analog zu den vorstehend dargestellten Ausführungsbeispielen zwei in einem Verstellgehäuse 10 angeordnete Sperrelemente 4k, 4k' und 4k", 4k''' in übereinanderliegenden Ebenen der Lastmomentsperre 1k sowie ein nicht näher dargestelltes Antriebselement, dessen Kulissen 20k, 20k' formschlüssig mit den Keilführungen 52k, 52k' zweier Keile 5k, 5k' verbunden sind, und ein um eine Abtriebsachse 30 drehbares Abtriebselement 3k auf.

Die Keile 5k, 5k' sind zwischen den einander gegenüberstehenden Spreizflächen 41k bis 41k''' der Sperrelemente 4k, 4k' und 4k", 4k''' jeder Ebene angeordnet, wobei sich die Spreizflächen 41k bis 41k''' zum Verstellgehäuse 10 hin öffnen und die Keilflächen 51k, 51k' der Öffnung der Spreizflächen 41k bis 41k''' angepaßt zum Verstellgehäuse 10 hin auseinanderlaufen, so daß die Keile 5k, 5k' "außenliegend" angeordnet sind. Dabei sind die Öffnungswinkel der Spreizflächen 41k, 41k' und 41k", 41k''' und der Keilflächen 51k, 51k' verschieden voneinander, so daß eine Linienanlage zwischen den Spreizflächen 41k, 41k' und 41k", 41k''' und den Keilflächen 51k, 51k' gegeben ist.

Die Sperrelemente 4k, 4k' und 4k", 4k''' jeder Ebene werden durch in Ausnehmungen der Sperrelemente 4k, 4k' und 4k", 4k''' angeordnete Sperrelementefedern 6k, 6k' auseinandergedrückt, so daß - wie zuvor beschrieben - die Spreizflächen 41k, 41k' und 41k", 41k''' an den Keilflächen 51k, 51k' und die Klemmflächen 43k, 43k' und 43k", 43k''' an dem Verstellgehäuse 10 anliegen.

Unter Einwirkung zweier Draht-, Bügel- oder Formfedern 7k, 7k' werden die Keile 5k, 5k' in Richtung auf das Verstellgehäuse 10 vorgespannt, so daß bei maximalem Spiel die in Figur 13 dargestellte Lage der Keile 5k, 5k' gegeben ist, während ein minimales Spiel die in Figur 14 gezeigte Stellung der Keile 5k, 5k' charakterisiert.

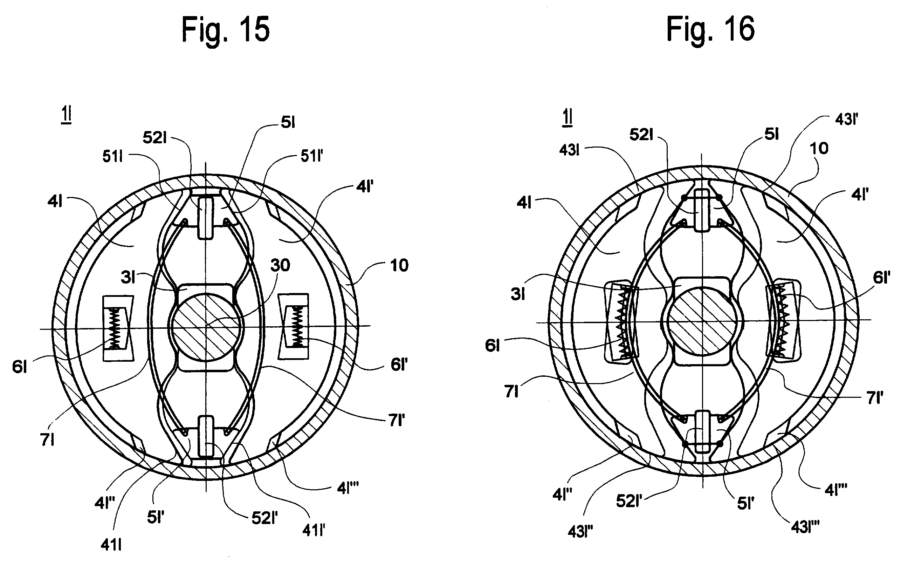

Die Lastmomentsperre 1l gemäß den Figuren 15 und 16 weist analog zu dem vorstehend beschriebenen Ausführungsbeispiel zwei in einem Verstellgehäuse 10 angeordnete Sperrelemente 4l, 4l' und 4l", 4l''' in übereinanderliegenden Ebenen der Lastmomentsperre 1l sowie ein nicht näher dargestelltes Antriebselement, dessen Kulissen 20l, 20l' formschlüssig mit den Keilführungen 52l, 52l' zweier Keile 5l, 5l' verbunden sind, und ein um eine Abtriebsachse 30 drehbares Abtriebselement 3l auf.

Die Keile 5l, 5l' sind zwischen den einander gegenüberstehenden Spreizflächen 41l bis 41l''' der Sperrelemente 4l, 4l' und 4l", 4l''' jeder Ebene angeordnet, wobei sich die Spreizflächen 41l bis 41l''' zum Verstellgehäuse 10 hin schließen, so daß die Keile 5l, 5l' "innenliegend" angeordnet sind, d.h. von den Spreizflächen 41l, 41l' und 41l", 41l''' der Bremselemente 4l, 4l' und 4l", 4l'''umfaßt werden. Die Sperrelemente 4l, 4l' und 4l", 4l''' jeder Ebene werden durch in Ausnehmungen der Sperrelemente 4l, 4l' und 4l", 4l''' angeordnete Sperrelementefedern 6l, 6l' auseinandergedrückt, so daß - wie zuvor beschrieben - die Spreizflächen 41l, 41l' und 41l", 41l''' an den Keilflächen 51l, 51l' und die Klemmflächen 43l, 43l' und 43l", 43l''' an dem Verstellgehäuse 10 anliegen.

Dabei sind auch hier die Öffnungswinkel der Spreizflächen 41l, 41l' und 41l'', 41l''' und der Keilflächen 51l, 51l' verschieden voneinander, so daß eine Linienanlage zwischen den Spreizflächen 41l, 41l' und 41l'', 41l''' und den Keilflächen 51l, 51l' gegeben ist.

Unter Einwirkung zweier Draht-, Bügel- oder Formfedern 7l, 7l' werden die Keile 5l, 5l' in Richtung auf das Verstellgehäuse 10 vorgespannt, so daß bei maximalem Spiel die in Figur 15 dargestellte Lage der Keile 5l, 5l' gegeben ist, während ein minimales Spiel die in Figur 16 gezeigte Stellung der Keile 5l, 5l' charakterisiert.

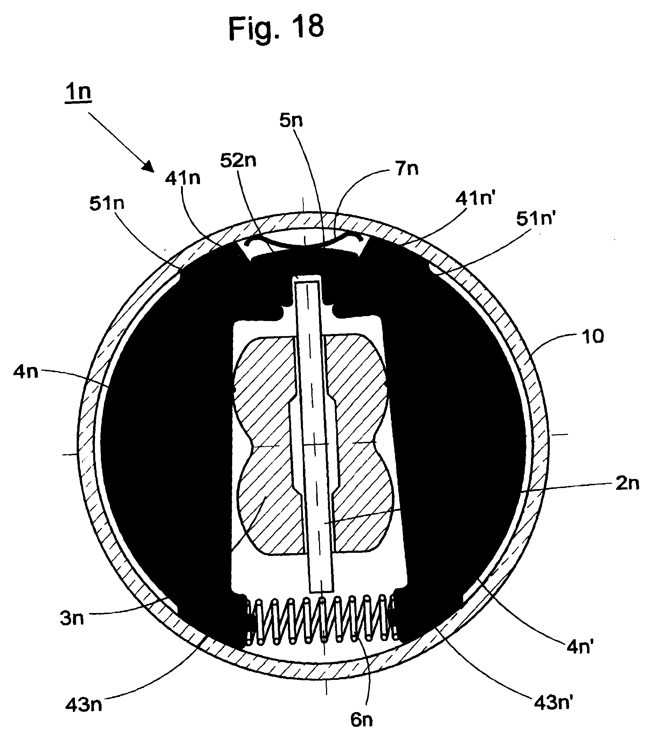

Weitere Varianten zum Spielausgleich zwischen einem Antriebselement, einem Abtriebselement und einer Lastmomentsperre mit in zwei Ebenen übereinander angeordneten Sperrelementpaaren sind in den Figuren 17 und 18 schematisch dargestellt.

Der in Figur 17 dargestellte Teil einer Verstellvorrichtung mit einer Lastmomentsperre 1m weist analog zu den vorstehend dargestellten Ausführungsbeispielen zwei in einem Verstellgehäuse 10 angeordnete Sperrelementepaare 4m, 4m' in übereinanderliegenden Ebenen der Lastmomentsperre 1m sowie ein stabförmiges Antriebselement 2m und ein das stabförmige Antriebselement 2m mit Spiel einfassendes Abtriebselement 3m auf.

Zwischen einander gegenüberstehenden Spreizflächen 41m, 41m' der Sperrelemente 4m, 4m' jeder Ebene ist an einem Ende der Sperrelemente 4m, 4m' eine Sperrelementefeder 6m angeordnet, die sowohl die Klemmflächen 43m, 43m' der Sperrelemente 4m, 4m' zur Anlage an das Verstellgehäuse 10 als auch durch Drehen der Sperrelemente 4m, 4m' im Verstellgehäuse 10 zur Anlage an Anlagepunkte A, B des Abtriebselements 3m bringt. Dabei liegen die Klemmflächen 43m, 43m' am Verstellgehäuse 10 an und durch Drehen der Sperrelemente 4m, 4m' in Umfangsrichtung erfolgt eine Anlage an den Anschlagpunkten A und B am Abtriebselement 3m.

Als Spielausgleichsvorrichtung ist ein Keil 5m vorgesehen, der mit seinen sich zum Verstellgehäuse 10 verjüngenden Keilflächen 51m, 51m' an den Spreizflächen 43m, 43m' der Sperrelemente 4m, 4m' anliegt und durch eine Bohrung 52m zur Führung des Keils 5m auf das stabförmige Antriebselement 2m gesteckt und durch dieses geführt wird. Zwischen der dem Verstellgehäuse 10 abgewandten Stirnfläche des Keils 5m und der dieser Stirnfläche zugewandten Stirnfläche des Abtriebselements 3m ist eine Feder 7m angeordnet, die den Keil 5m in Richtung auf die Spreizflächen 51m, 51m' vorspannt und damit infolge der Konfiguration der einander zugewandten Spreizflächen 41m, 41m' der Sperrelemente 4m, 4m' sowie der Keilflächen 51m, 51m' des Keils 5m ein paralleles Auseinanderschieben bzw. radiales Anlegen der Sperrelemente 4m, 4m' in jeder Ebene an das Verstellgehäuse 10 bewirkt.

Die Keilflächen 51m, 51m' des Keils 5m liegen so an den Spreizflächen 41m, 41m' der Sperrelemente 4m, 4m' an, daß keine Selbsthemmung zwischen den Sperrelementen 4m, 4m' und dem Keil 5m gegeben ist. Unter Einwirkung der Sperrelementefedern 6m mit der daraus resultierenden Drehung der Sperrelemente 4m, 4m' im Verstellgehäuse 10 wird der Keil 5m gegen die Feder 7m zurückgedrückt.

Wird auf das Antriebselement 2m ein Antriebsmoment entgegen dem Abtriebsmoment ausgeübt, so wird dieses Antriebsmoment zunächst auf den Keil 5m übertragen, da zwischen dem Antriebselement 2m und dem Abtriebselement 3m hinreichend Spiel vorgesehen ist. Der Keil 5m wird vom Antriebselement 2m gegen die Sperrelemente 4m, 4m' mit Selbsthemmung gedrückt und hebt die Klemmflächen 43m, 43m' der Sperrelemente 4m, 4m' geringfügig von ihrer Anlage am Verstellgehäuse 10 ab, so daß der Reibschluß aufgehoben bzw. vermindert wird und das Antriebselement 2m infolge der Überwindung des Spiels zwischen Antriebselement 2m und Abtriebselement 3m zur Anlage an den Innenflächen des Abtriebselements 3m kommt. Damit wird das Antriebsmoment unmittelbar auf das Abtriebselement 3m in Drehrichtung des Antriebsmoments übertragen.

Wird dagegen ein Drehmoment auf das Abtriebselement 3m ausgeübt, so überträgt das Abtriebselement 3m aufgrund seiner Anlage an den Punkten A und B an den Sperrelementen 4m, 4m' das Drehmoment auf die Sperrelemente 4m, 4m', wodurch die Anlage der Klemmflächen 43m, 43m' am Verstellgehäuse 10 verstärkt und damit eine Drehmomentübertragung vom Abtriebselement 3m auf das Antriebselement 2m blockiert wird.

Eine zur Ausführungsform gemäß Figur 17 im wesentlichen gleichartige Anordnung ist in Figur 18 dargestellt. Im Unterschied zu der Ausführungsform gemäß Figur 17 ist bei der Lastmomentsperre 1n gemäß Figur 18 der Keil 5n mit einer Aussparung 52n versehen, in die ein Ende des Antriebselements 2n eingreift und dadurch den Keil 5n führt, und die Keilflächen 51n, 51n' erweitern sich zum Verstellgehäuse 10 hin und liegen an entsprechend sich zum Verstellgehäuse öffnenden Spreizflächen 41n, 41n' der Sperrelemente 4n, 4n' an, d.h der Abstand zwischen den Spreizflächen 41n, 41n' der Sperrelemente 4n, 4n' vergrößert sich zum Verstellgehäuse 10 hin. An den Spreizflächen 41n, 41n' liegen die Keilflächen 51n 51n' des Keils 5n unter Wirkung einer schwachen Feder 7n anliegen, die zwischen dem Verstellgehäuse 10 und der dem Verstellgehäuse 10 zugewandten Stirnfläche des Keils 7n angeordnet ist.

Analog zur Anordnung gemäß Figur 17 liegen die Keilflächen 51n, 51n' des Keils 5n so an den Spreizflächen 41n, 41n' der Sperrelemente 4n, 4n' an, daß keine Selbsthemmung zwischen den Sperrelementen 4n, 4n' und dem Keil 7n gegeben ist. Unter Einwirkung der Sperrelementefeder 6n mit der daraus

resulierenden Drehung der Sperrelemente 4n, 4n' im Verstellgehäuse 10 wird der Keil 5n gegen die Feder 7n zurückgedrückt.

Wird auf das Antriebselement 2n ein Antriebsmoment entgegen dem Abtriebsmoment ausgeübt, so wird dieses Antriebsmoment zunächst auf den Keil 5n übertragen, da zwischen dem Antriebselement 2n und dem Abtriebselement 3n hinreichend Spiel vorgesehen ist. Der Keil 5n wird vom Antriebselement 2n gegen die Sperrelemente 4n, 4n' mit Selbsthemmung gedrückt und hebt die Klemmflächen 43n, 43n' der Sperrelemente 4n, 4n' geringfügig von ihrer Anlage am Verstellgehäuse 10 ab, so daß der Reibschluß aufgehoben bzw. vermindert wird und das Antriebselement 2n infolge der Überwindung des Spiels zwischen Antriebselement 2n und Abtriebselement 3n zur Anlage an den Innenflächen des Abtriebselements 3n kommt, wodurch das Antriebsmoment unmittelbar auf das Abtriebselement 3n in Drehrichtung des Antriebsmoments übertragen wird.

Wird dagegen ein Drehmoment auf das Abtriebselement 3n ausgeübt, so überträgt das Abtriebselement 3n aufgund der Anlage von Abtriebselement 3n und Sperrelementen 4n, 4n' an den Punkten A und B das Drehmoment auf die Sperrelemente 4n, 4n', deren Klemmflächen 43n, 43n' ihre Anlage am Verstellgehäuse 10 verstärken, so daß eine Drehmomentübertragung vom Abtriebselement 3n auf das Antriebselement 2n blockiert wird.

Allen vorstehend beschriebenen Verstellvorrichtungen ist die Grundfunktion gemeinsam, wonach bei einem in Richtung des Abtriebsmoments wirkenden Antriebsmoment die durch die Sperrelement bewirkte Sperre aufgehoben wird, aber latent wirksam bleibt, damit bei einem Aufheben des Antriebsmoments ein sofortiges Sperren erfolgt. Wirkt hingegen das Antriebsmoment gegen das Abtriebsmoment, so wird die Sperre aufgehoben und das Antriebsmoment in den Abtrieb eingeleitet wird. Dabei erfolgt ein geringfügiges Abheben bzw. zirkulares Drehen der Sperrelement und anschließend eine sofortige erneute Anlage am Verstellgehäuse.

**Patentansprüche**

1. Verstellvorrichtung zur Erzeugung einer Drehbewegung mit einem durch Betätigen eines Antriebselements winkelverstellbaren Abtriebselement und mit einer zwischen dem Antriebs- und dem Abtriebselement angeordneten Lastmomentsperre, die ein abtriebsseitig eingeleitetes Drehmoment kraftschlüssig blockiert und ein antriebsseitig eingeleitetes Drehmoment auf das Abtriebselement überträgt, insbesondere für Fensterheber oder Sitzverstellungen eines Fahrzeuges, **dadurch gekennzeichnet,** daß zwischen dem Antriebselement (2) und der Lastmomentsperre (1) und/oder zwischen dem Abtriebselement (3) und der Lastmomentsperre (1) eine das Drehwinkelspiel zwischen dem Antriebselement (2), dem Abtriebselement (3) und der Lastmomentsperre (1) ausgleichende Spielausgleichsvorrichtung (5) angeordnet ist.

2. Verstellvorrichtung nach Anspruch 1, **dadurch gekennzeichnet**, daß die Lastmomentsperre (1) mindestens zwei in einem zylindrischen Verstellgehäuse (10) angeordnete Sperrelemente (4, 4') aufweist, daß Klemmflächen (43) der Sperrelemente (4, 4') unter Einwirkung der Spielausgleichsvorrichtung (5) am Verstellgehäuse (10) anliegen, und daß ein abtriebsseitig eingeleitetes Drehmoment die Anlage der Sperrelemente (4, 4') am Verstellgehäuse (10) verstärkt.

3. Verstellvorrichtung nach Anspruch 2, **dadurch gekennzeichnet**, daß die Spielausgleichsvorrichtung (5) zumindest teilweise zwischen einander gegenüberliegenden Spreizflächen (41) der Sperrelemente (4, 4') angeordnet ist und die Sperrelemente (4, 4') mit einer solchen Kraft auseinanderdrückt, daß die Klemmflächen (43) der Sperrelemente (4, 4') mit vorgegebener Vorspannung am Verstellgehäuse (10) anliegen.

4. Verstellvorrichtung nach Anspruch 2 oder 3, **dadurch gekennzeichnet**, daß die Spielausgleichsvorrichtung (5) im Antriebselement (2) geführt und mit einer Feder (50) verbunden ist, die die Spielausgleichsvorrichtung (5) in Spielausgleichsrichtung vorspannt.

5. Verstellvorrichtung nach mindestens einem der vorangehenden Ansprüche, **dadurch gekennzeichnet**, daß die Sperrelemente (4, 4') entgegen der Spielausgleichsrichtung mit einer Vorspannkraft beaufschlagt ist.

6. Verstellvorrichtung nach mindestens einem der vorangehenden Ansprüche, **dadurch gekennzeichnet**, daß die Spielausgleichsvorrichtung aus mindestens einem zwischen den Spreizflächen (41a) der Sperrelemente (4a, 4a') angeordneten Keil (5a) besteht, dessen Keilflächen (51a) den Spreizflächen (41a) der Sperrelemente (4a, 4a') gegenüberstehen und der mit einer Keilführung (52a) formschlüssig in einer Kulisse (20a) des Antriebselements (2a) verschiebbar geführt und mittels einer Feder (50a) radial so vorgespannt ist, daß die Keilflächen (51a) spielfrei an den Spreizflächen (41a) anliegen.

7. Verstellvorrichtung nach Anspruch 6, **dadurch gekennzeichnet**, daß die Materialpaarung der Spreizflächen (41a) und der Keilflächen (51a) einerseits und den Wirkflächen der Keilführung (52a) und der Kulisse (20a) des Antriebselements (2a) andererseits so vorgegeben ist, daß bei fehlendem Antriebsmoment die Spreizflächen (41a) den Keil (5a) gegen die Wirkung der Feder (50a) verschieben können und daß bei antriebsseitiger Belastung der Keil (5a) in seiner Position gehalten wird.

8. Verstellvorrichtung nach Anspruch 7, **dadurch gekennzeichnet**, daß der Keilwinkel α, den die Keilflächen (51a) zwischen sich einschließen, der minimale Reibwinkel $\sigma_{sperr,min}$ und der maximale Reibwinkel $\sigma_{sperr,max}$ zwischen den Keilflächen (51a) und den Spreizflächen (41a) sowie der minimale Reibwinkel $\sigma_{antr,min}$ zwischen der Keilführung (52a) und der Kulisse (20a) folgenden Bedingungen genügen:

$$2 * \sigma_{sperr,max} < \alpha$$

$$\sigma_{antr,min} + \sigma_{sperr,min} > \alpha/2$$

wobei $\sigma = \arctan \mu$ und μ der Reibwert zwischen den aus den Flächenpaarungen Keilfläche/Spreizfläche und Keilführung/Kulisse gebildeten Reibflächen ist.

9. Verstellvorrichtung nach Anspruch 8, **dadurch gekennzeichnet**, daß die Keilführung (52b) radial versetzt zu den Spreizflächen (41b) der Sperrelemente (4b, 4b') angeordnet ist.

10. Verstellvorrichtung nach mindestens einem der vorangehenden Ansprüche 6 bis 9, **dadurch gekennzeichnet**, daß die Spreizflächen (41c) der Sperrelemente (4c, 4c') oder die Keilflächen (51c) ballig ausgebildet sind.

11. Verstellvorrichtung nach mindestens einem der vorangehenden Ansprüche 1 bis 5, **dadurch gekennzeichnet**, daß die Spielausgleichsvorrichtung aus mindestens einer zwischen den Spreizflächen (41d) der Sperrelemente (4d, 4d') angeordneten zylinderförmigen Rolle oder einer Kugel (5d) besteht, deren Rollen- oder Kugelführung (52d) in einer Kulisse (20d) des Antriebselements (2d) angeordnet und deren Außenfläche mit Linien- oder Punktberührung spielfrei an den ebenen oder balligen Spreizflächen (41d) der Sperrelemente (4d, 4d') anliegt.

12. Verstellvorrichtung nach mindestens einem der vorangehenden Ansprüche 1 bis 5, **dadurch gekennzeichnet**, daß die Spielausgleichsvorrichtung aus mindestens einem zwischen den Spreizflächen (41e) der Sperrelemente (4e, 4e') drehbar angeordneten Exzenter (5e) besteht, der als Stutenbolzen ausgebildet und mit einem Exzenterzapfen (52e) in einer Bohrung (20e) des Antriebselements (2e) angeordnet und mittels einer Drehfeder radial so vorgespannt ist, daß die Exzenterflächen (51e) spielfrei an den Spreizflächen (41e) der Sperrelemente (4e, 4e') anliegen.

13. Verstellvorrichtung nach Anspruch 12, **dadurch gekennzeichnet**, daß durch Formgebung und/oder Oberflächenbeschaffenheit die Exzenterflächen (51e) so an den Spreizflächen (41e) der Sperrelemente (4e, 4e') anliegen und der Exzenterzapfen (52e) so mit dem Antriebselement (2e) verbunden ist, daß der Exzenter (5e) beim Betätigen des Antriebselements (2e) blockiert und die Bewegung der Sperrelemente (4e, 4e') nicht behindert.

14. Verstellvorrichtung nach mindestens einem der vorangehenden Ansprüche, **gekennzeichnet durch** zwei in axialer Richtung der Lastmomentsperre (1f bis 1i) einer Verstellvorrichtung in übereinanderliegenden Ebenen angeordnete Sperrelementepaare (4f bis 4i) für beide Drehrichtungen der Verstellvorrichtung, und ein als Mitnehmerscheibe (2f bis 2i) ausgebildetes Antriebselement, das radiale, vorzugsweise einander diametral gegenüberliegende Schlitze (20f bis 20i) zur Aufnahme der Spielausgleichsvorrichtung (5f bis 5i; 7f bis 7i; 81f, 82f; 81h, 82h; 81i, 82i) aufweist.

15. Verstellvorrichtung nach Anspruch 14, **dadurch gekennzeichnet**, daß die Spielausgleichsvorrichtung zwei in Kulissen (20g, 20g') der Mitnehmerscheibe (2g) und in Ausnehmungen (44g, 44g', 44g'', 44g''') der Sperrelemente (4g, 4g') angeordnete Keile (5g, 5g'), deren Keilführungen (52g, 52g') in den Kulissen (20g, 20g') der Mitnehmerscheibe (2g) angeordnet sind und deren beidseitige Keilflächen (51g, 51g') an keilförmige Anschlagflächen der Ausnehmungen (44g, 44g', 44g'', 44g''') der übereinander angeordneten Sperrelementepaare (4g, 4g', 4g'', 4g''') anliegen und bei radialer Verschiebung in den Kulissen (20g, 20g') der Mitnehmerscheibe (2g) eine in Umfangsrichtung wirkende Kraft auf die Sperrelemente (4g, 4g', 4g'', 4g''') ausüben.

16. Verstellvorrichtung nach Anspruch 15, **dadurch gekennzeichnet**, daß abtriebsseitige Anschlagflächen (41g, 41g', 41g'', 41g''') der Sperrelemente (4g, 4g', 4g'', 4g''') einer Ebene gegen Sperrelementefedern (6g, 6g') drücken, die die Sperrelemente (4g, 4g', 4g'', 4g''') einer Ebene mit dem Abtriebselement (3g) koppeln.

17. Verstellvorrichtung nach Anspruch 14, **dadurch gekennzeichnet**, daß die Spielausgleichsvorrichtung aus auf der Mitnehmerscheibe (2f, 2h, 2i) radial verschiebbar angeordneten Keilen (5f, 5h, 5i) und um die Abtriebsachse (30) drehbar gelagerten Scherenarmen (81f, 82f; 81h, 82h; 81i, 82i) besteht, die durch die Keilflächen (51f, 51h, 51i) der Keile (5f, 5h, 5i) auseinandergespreizt werden und an ihren dem Verstellgehäuse (10) benachbarten radialen Anschlägen an Spreizflächenanschläge (46f) der Sperrelemente (4f, 4h, 4i) anliegen.

18. Verstellvorrichtung nach Anspruch 17, **dadurch gekennzeichnet**, daß der Winkel zwischen den Anlageflächen der Scherenarme (81f, 82f; 81h, 82h; 81i, 82i) und der Mittenachse der Keile (5f, 5h, 5i) Selbsthemmung zwischen den Keilen (5f, 5h, 5i) und der Mitnehmerscheibe (2f, 2h, 2i) bewirkt.

19. Verstellvorrichtung nach Anspruch 17 oder 18, **dadurch gekennzeichnet**, daß der die Keilflächen (51f, 51h, 51i) der Keile (5f, 5h, 5i) einschließende Winkel und die Oberflächenbeschaffenheit der Keilflächen (51f, 51h, 51i) und der Anlageflächen der Scherenarme (81f, 82f; 81h, 82h; 81i, 82i) keine Selbsthemmung zwischen den Keilen (5f, 5h, 5i) und den Scherenarmen (81f, 82f; 81h, 82h; 81i, 82i) bewirken.

20. Verstellvorrichtung nach mindestens einem der vorangehenden Ansprüche 14 bis 19, **gekennzeichnet durch** eine radiale, die Selbsthemmung unterstützende Oberflächenbeschaffenheit der Keilführung (52f bis 52i) der Keile (5f bis 5i) und/oder der Kulissen der Mitnehmerscheibe (2f bis 2i).

21. Verstellvorrichtung nach mindestens einem der vorangehenden Ansprüche 17 bis 20, **dadurch gekennzeichnet**, daß die Anlageflächen der Scherenarme (81f, 82f; 81h, 82h; 81i, 82i) zumindest teilweise konvex ausgebildet sind und an ebenen oder konvexen Keilflächen (51f, 51h, 51i) anliegen.

22. Verstellvorrichtung nach mindestens einem der vorangehenden Ansprüche 14 bis 21, **gekennzeichnet durch** die Keile (5f bis 5i) in Richtung auf die Abtriebsachse (30) bewegende Federelemente (7f bis 7i).

23. Verstellvorrichtung nach Anspruch 22, **dadurch gekennzeichnet**, daß die Federelemente aus zwischen dem Verstellgehäuse (10) und den dem Verstellgehäuse (10) zugewandten Stirnflächen der Keile (5f bis 5i) angeordneten Druckfedern (7f bis 7i) bestehen.

24. Verstellvorrichtung nach Anspruch 22, **dadurch gekennzeichnet**, daß die Federelemente aus Bügel- oder Formfedern (7i) bestehen, die mit abgewinkelten Enden (71i, 72i) in Aussparungen (55i, 55i') an den dem Verstellgehäuse (10) gegenüberliegenden Stirnflächen der einander diametral gegenüberliegenden Keile (5i, 5i') eingreifen.

25. Verstellvorrichtung nach Anspruch 22, **dadurch gekennzeichnet**, daß die Federelemente aus Drahtfedern (7h, 7h'; 7k, 7k'; 7l, 7l') bestehen, deren Enden in Ausnehmungen (54h, 54h') der Keilflächen (51h, 51h') oder an Befestigungen der Keile (5k, 5k'; 5l, 5l') abgestützt sind.

26. Verstellvorrichtung nach mindestens einem der vorangehenden Ansprüche 1 bis 13, **gekennzeichnet durch** ein stabförmiges Antriebselement (2m, 2n), ein das stabförmige Antriebselement (2m, 2n) umfassendes, hohlzylindrisches Abtriebselement (3m, 3n), zwei zwischen dem Abtriebselement (3m, 3n) und dem Verstellgehäuse (10) in jeder Ebene angeordnete Sperrelementepaare (4m, 4m'; 4n, 4n') in übereinanderliegenden Ebenen der Lastmomentsperre (1m, 1n), zwischen Spreizflächen (41m, 41m'; 41n, 41n') der Sperrelemente (4m, 4m'; 4n, 4n') in jeder Ebene angeordnete Federelemente (6m, 6n), die die Klemmflächen (43m, 43m'; 43n, 43n') der Sperrelemente (4m, 4m'; 4n, 4n') sowohl zur Anlage an das Verstellgehäuse (10) als auch durch Drehen der Sperrelemente (4m, 4m'; 4n, 4n') im Verstellgehäuse (10) zur Anlage an Anlagepunkte (A, B) des Abtriebselements (3m, 3n) bringen, einen Keil (5m, 5n), dessen Keilflächen (51m, 51m'; 51n, 51n') an den Spreizflächen (41m, 41m'; 41n, 41n') der Sperrelemente (4m, 4m'; 4n, 4n') anliegen, die gegenüber den Spreizflächen (41m, 41m'; 41n, 41n') liegen, an denen die Sperrelementefeder (6m, 6n) anliegt, wobei der Keil (5m, 5n) eine Bohrung oder Ausnehmung aufweist, in die das Antriebselement (2m, 2n) gesteckt ist, und eine den Keil (5m, 5n) gegen die Spreizflächen (41m, 41m'; 41n, 41n') der Sperrelemente (4m, 4m'; 4n, 4n') vorspannende Feder (7m, 7n).

27. Verstellvorrichtung nach Anspruch 26, **dadurch gekennzeichnet**, daß die Keilflächen (51m, 51m'; 51n, 51n') durch Wahl des Keilwinkels, der Federkonstante der Feder (7m, 7n) und/oder der Reibziffer zwischen den Spreizflächen (41m, 41m'; 41n, 41n') der Sperrelemente (4m, 4m'; 4n, 4n') und des Keils (7m, 7n) so an den Spreizflächen (41m, 41m'; 41n, 41n') der Sperrelemente (4m, 4m'; 4n, 4n') anliegen, daß keine Selbsthemmung zwischen den Sperrelementen (4m, 4m'; 4n, 4n') und dem Keil (7m, 7n) vorliegt.

28. Verstellvorrichtung nach mindestens einem der vorangehenden Ansprüche, **dadurch gekennzeichnet**, daß das Antriebselement (2) Klauen aufweist, die bei einem antriebsseitigen Drehmoment nach Aufheben der reibschlüssigen Anlage der Sperrelemente (4, 4') an dem Verstellgehäuse (10) formschlüssig in Ausnehmungen des Abtriebselements eingreifen und dieses in Antriebsrichtung mitnehmen.

29. Verstellvorrichtung nach mindestens einem der vorangehenden Ansprüche 1 bis 28, **dadurch gekennzeichnet**, daß das Antriebselement (2) Ausnehmungen aufweist, die sich bei einem antriebsseitigen Drehmoment nach Aufheben der reibschlüssigen Anlage der Sperrelemente (4, 4') an dem Verstellgehäuse (10) formschlüssig an Klauen des Abtriebselements anlegen und dieses in Antriebsrichtung mitnehmen.

# Fig. 1

# Fig. 2a

# Fig. 2b

# Fig. 2c

# Fig. 3a

# Fig. 3b

# Fig. 4

2c  51c  51c'

Antrieb

41c

Sperre

Sperre

41c'

4c

52c

5c

4c'

# Fig. 5

2d  5d

Antrieb

41d

41d'

Sperre

Sperre

4d

51d

4d'

52d  20d

# Fig. 6

# Fig. 7a

5e     20e     2e

4e

$\alpha_{Sp_{max}}$

$F_{EF}$

Antrieb

$\alpha_{Sp_{max}}$

52e     4e'

# Fig. 7b

5e     20e     2e

4e

$F_{EF}$

Antrieb

$\alpha_{Sp_{min}}$

$\alpha_{Sp_{min}}$

52e     4e'

# Fig. 8

# Fig. 9

# Fig. 10

# Fig. 11

# Fig. 12

Fig. 14

Fig. 13

Fig. 15

Fig. 16

EP 1 059 195 A2

# Fig. 17

# Fig. 18